# EUROPEAN PATENT APPLICATION

(11) **EP 4 797 408 A1**
(43) Date of publication of application: **26.08.2026**
(21) Application number: 26712738.9
(22) Date of filing: 04.01.2026
(51) Int. Cl.: H01M 50/244, H01M 50/258, H01M 50/358

(54) **BATTERY CELL FRAME, BATTERY MODULE AND BATTERY PACK**

(30) Priority: 06.01.2025 CN 202520026811 U
(71) Applicant: Eve Energy Co., Ltd, Huizhou, Guangdong 516006 (CN)
(72) Inventor: HE, Zonghao, Huizhou, Guangdong 516006 (CN); ZHU, Qiang, Huizhou, Guangdong 516006 (CN); ZHANG, Zhiqi, Huizhou, Guangdong 516006 (CN)
(74) Representative: Zhu, Puxing
(86) International application number: PCT/CN2026/070246
(87) International publication number: WO 2026/145775

(57) **Abstract**

The present application provides a cell holder, a battery module, and a battery pack. The cell holder includes a holder body, and the holder body is provided with a mounting groove. The mounting groove is configured to mount a cell, a bottom surface of the mounting groove is provided with a pressure-relief hole, and the pressure-relief hole is configured to correspond to a position where an explosion-proof valve of the cell is located. The holder body is connected to a flow guide member protruding in a direction away from an opening of the mounting groove. The flow guide member covers part of the pressure-relief hole, and the flow guide member is configured to direct gas to be discharged in a predetermined direction after passing through the pressure-relief hole.

## Description

This application claims priority to and the benefit of Chinese Patent Application No. 202520026811.2, filed with the China National Intellectual Property Administration on Jan. 06, 2025, the disclosure of which is incorporated herein by reference in its entirety.

### TECHNICAL FIELD

The present application relates to the field of battery technologies, for example, to a cell holder, a battery module, and a battery pack.

### BACKGROUND

In the related art, the cell is typically provided with an explosion-proof valve to ensure safety in the event of thermal runaway. In a battery module, the cell is usually mounted on a cell holder.

### SUMMARY

The cell holder is not equipped with corresponding pressure-relief channels, resulting in the inability of gases to be rapidly expelled after pressure relief through the explosion-proof valve, thereby posing a safety risk.

The present application provides a cell holder, including:
a holder body provided with a mounting groove, where the mounting groove is configured to mount a cell, a bottom surface of the mounting groove is provided with a pressure-relief hole, and the pressure-relief hole is configured to correspond to a position where an explosion-proof valve of the cell is located;
where the holder body is connected to a flow guide member protruding in a direction away from an opening of the mounting groove; the flow guide member covers part of the pressure-relief hole, and the flow guide member is configured to direct gas to be discharged in a predetermined direction after passing through the pressure-relief hole.

The present application further provides a battery module, including:
a first bracket;
a second bracket spaced apart from the first bracket; and
a cell connected between the first bracket and the second bracket;
where at least one of the first bracket and the second bracket adopts the above-mentioned cell holder.

The present application further provides a battery pack. The battery pack includes the battery module as described above.

### BENEFICIAL EFFECTS

In the cell holder according to the present application, the cell is installed by constructing the mounting groove on the holder body. The pressure-relief hole is set on the bottom surface of the mounting groove. Since the pressure-relief hole corresponds to the position where the explosion-proof valve of the cell is located, when thermal runaway occurs in the cell causing the explosion-proof valve to open, the gas generated inside the cell can escape through the pressure-relief hole after being released from the explosion-proof valve. This prevents the accumulation of gas within the cell holder, thereby eliminating safety hazards and enhancing the safety of the battery module.

### BRIEF DESCRIPTION OF THE DRAWINGS

FIG. 1 is a first schematic structural diagram of a cell holder according to some embodiments of the present application.
FIG. 2 is a second schematic structural diagram of the cell holder according to some embodiments of the present application.
FIG. 3 is a schematic structural diagram of a battery module according to some embodiments of the present application.
FIG. 4 is an exploded view of FIG. 3.
FIG. 5 is a cross-sectional view of the battery module provided in FIG. 3.
FIG. 6 is an enlarged view of portion A in FIG. 5.
FIG. 7 is a partial enlarged view at a mounting groove of the cell holder according to some embodiments of the present application.

### Description of reference numerals:

10, cell holder; 110, mounting groove; 120, pressure-relief hole; 130, mounting notch; 140, through hole; 150, positioning portion; 160, support portion; 20, flow guide member; 210, shielding portion; 220, connecting portion; 230, flow guide outlet; 30, heat insulation member; 310, positioning hole; 320, first heat insulation layer; 330, second heat insulation layer; 340, third heat insulation layer; 40, battery module; 410, first bracket; 420, second bracket; 430, cell; 50, first pressure-relief channel; 60, second pressure-relief channel; 70, third pressure-relief channel.

### DETAILED DESCRIPTION

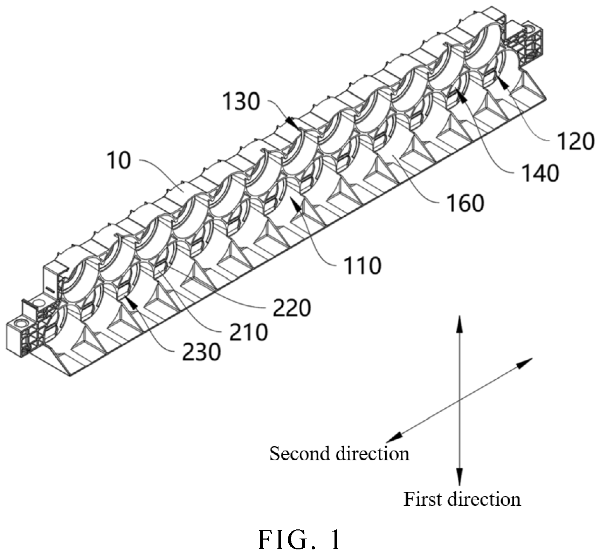

As shown in FIGs. 1 to 7, some embodiments of the present application provide a cell holder 10. The cell holder 10 includes a holder body, which is provided with a mounting groove 110. The mounting groove 110 is configured to accommodate a cell 430. The bottom surface of the mounting groove 110 is provided with a pressure-relief hole 120, and the pressure-relief hole 120 is configured to correspond to the position where the explosion-proof valve of the cell 430 is located.

In the embodiments of the present application, the cell 430 is installed by constructing the mounting groove 110 on the holder body. The pressure-relief hole 120 is set on the bottom surface of the mounting groove 110. Since the pressure-relief hole 120 corresponds to the position where the explosion-proof valve of the cell 430 is located, when thermal runaway occurs in the cell 430 causing the explosion-proof valve to open, the gas generated inside the cell 430 can escape through the pressure-relief hole 120 after being released from the explosion-proof valve. This prevents the accumulation of gas within the cell holder 10, thereby eliminating safety hazards and enhancing the safety of the battery module 40.

In some embodiments, the holder body is made of plastic material. This allows the holder body with the mounting groove 110 to be directly molded through injection molding. The shape, size, and other parameters of the mounting groove 110 can be reasonably set based on the shape, size, and other characteristics of the cell 430.

For example, when the cell 430 is a cylindrical cell, the mounting groove 110 is configured as a circular groove. The cylindrical cell can be mounted horizontally on the holder body. Alternatively, the cylindrical cell can be mounted vertically on the holder body. For another example, when the cell 430 is a prismatic cell, the mounting groove 110 is configured as a rectangular groove.

In the embodiments of the present application, the correspondence between the pressure-relief hole 120 and the position where the explosion-proof valve of the cell 430 is located means that the projection of the pressure-relief hole 120 exactly coincides with the projection of the explosion-proof valve in a direction perpendicular to the bottom surface of the groove. Alternatively, the projection of the pressure-relief hole 120 is larger than the projection of the explosion-proof valve, and the projection of the pressure-relief hole 120 covers the projection of the explosion-proof valve.

It should be noted that the shape of the pressure-relief hole 120 can be set to any shape, such as circular, elliptical, square, oblong, or arc-shaped, as long as the pressure-relief hole 120 can cover the explosion-proof valve of the cell 430.

As shown in FIG. 1, the holder body is further provided with a support portion 160 on a side of the opening of the mounting groove 110. The support portion 160 can be configured to support the cell 430. For example, when the cell 430 is configured as a cylindrical cell, the support portion 160 has an arcuate surface, allowing the cylindrical cell to be horizontally mounted in the mounting groove 110 and supported.

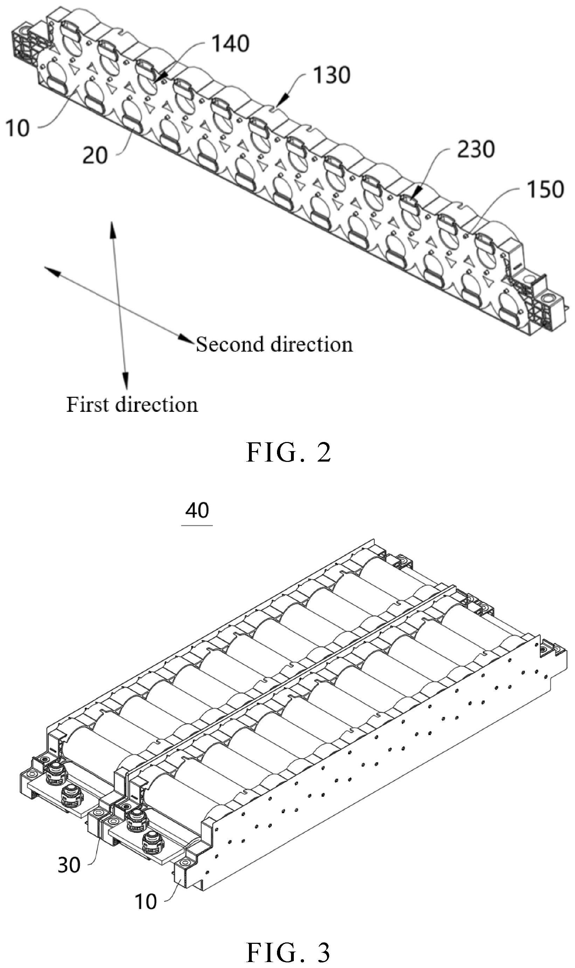

As shown in FIG. 2, in some embodiments, the holder body is connected to a flow guide member 20 that protrudes in a direction away from the opening of the mounting groove 110. The flow guide member 20 covers part of the pressure-relief hole 120. The flow guide member 20 is configured to direct the gas to be discharged in a predetermined direction after passing through the pressure-relief hole 120.

It can be understood that when the explosion-proof valve opens to release the gas generated by the cell 430, directly discharging the gas from the pressure-relief hole 120 may cause the gas to scatter within the battery box, creating safety hazards. In the embodiments of the present application, by providing the flow guide member 20 on the holder body, the flow guide member 20 ensures that the gas is discharged from the pressure-relief hole 120 in the predetermined direction. This ensures that the gas is expelled in a controlled manner.

It should be noted that the predetermined direction can be upward, downward, to the left, to the right, to the upper left, to the lower left, to the upper right, to the lower right, and so on. The direction from which the gas is expelled can be selected based on the model of the cell holder 10 and the model of the cell 430.

For example, if the holder body is equipped with two layers of mounting grooves 110 arranged vertically, the flow guide member 20 corresponding to the upper mounting groove 110 can direct the gas to be expelled upward from the holder body after passing through the pressure-relief hole 120. Conversely, the flow guide member 20 corresponding to the lower mounting groove 110 can direct the gas to be expelled downward from the holder body after passing through the pressure-relief hole 120.

As shown in FIG. 1, the flow guide member 20 is a structure connected to the side of the holder body that is away from the opening of the mounting groove 110. The flow guide member 20 is integrally formed with the holder body. The protruding flow guide member 20 itself contains a flow guide chamber, and the portion of the flow guide member 20 not covering the pressure-relief hole 120 forms a flow guide outlet 230. When the holder body is equipped with the flow guide member 20, the flow guide chamber is communicated with the pressure-relief hole 120. Gas discharged from the pressure-relief hole 120 will enter the flow guide chamber, then flow along the extension direction of the flow guide chamber, and be expelled through the flow guide outlet 230. This ensures that the gas is discharged in a predetermined direction, enhancing safety.

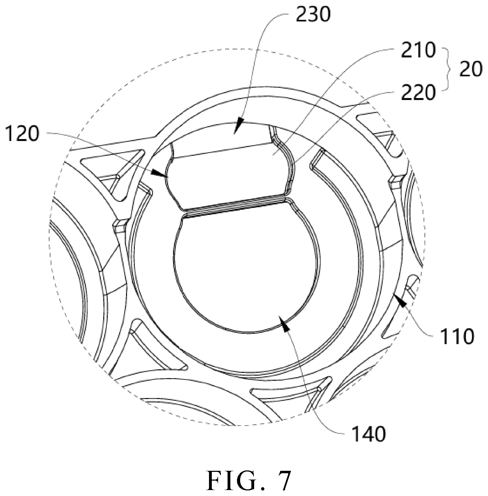

Please refer to FIG. 1 and FIG. 7. In some embodiments, the flow guide member 20 includes a shielding portion 210 and a connecting portion 220. The shielding portion 210 is spaced apart from the holder body and covers part of the pressure-relief hole 120. The connecting portion 220 is connected between the shielding portion 210 and the holder body. The connecting portion 220 extends along the periphery of the pressure-relief hole 120. The flow guide outlet 230 is formed in the connecting portion 220. The flow guide outlet 230 is communicated with the pressure-relief hole 120. The flow guide outlet 230 is oriented in the predetermined direction.

It can be understood that the shielding portion 210 serves as a structure to shield and enclose the pressure-relief hole 120, and the shape of the shielding portion 210 is adapted to the shape of the pressure-relief hole 120. The connecting portion 220 serves as a structure to connect the shielding portion 210 to the holder body, and the flow guide outlet 230 formed in the connecting portion 220 is configured to discharge gas, ensuring that the gas is expelled in the predetermined direction.

It should be noted that the shielding portion 210 is spaced apart from the holder body along the depth direction of the mounting groove 110, and the shielding portion 210 is located on the side of the holder body that is away from the mounting groove 110. The width of the gap between the shielding portion 210 and the holder body defines the width of the flow guide outlet 230. Depending on different models of the cell 430, the specific value of this gap width can be selected to ensure the efficiency of gas discharge.

In some embodiments, the shielding portion 210, the connecting portion 220, and the holder body are integrally formed by injection molding.

As shown in FIG. 1 and FIG. 2, in some embodiments, the holder body is equipped with at least two layers of mounting zones in a first direction. Each layer of the mounting zone includes at least two mounting grooves 110. The at least two mounting grooves 110 are spaced apart in the second direction. The first direction and the second direction are set at an angle to each other.

It can be understood that by providing at least two layers of mounting zones in the holder body, at least two layers of cells 430 can be mounted on the holder body. Since each layer of the mounting zone includes at least two mounting grooves 110, at least two cells 430 can be mounted on each layer. This allows a single holder body to accommodate a plurality of cells 430.

It should be noted that the first direction and the second direction may be set at an acute angle. Alternatively, the first direction and the second direction may be set at an obtuse angle. Alternatively, the first direction and the second direction may be set at a right angle. In a preferred embodiment of the present application, the first direction is perpendicular to the second direction. Please refer to FIG. 1 and FIG. 2, where the first direction is the height direction of the cell holder 10, and the second direction is the length direction of the cell holder 10. In this configuration, the cells 430 are mounted horizontally on the cell holder 10.

In some embodiments, the first direction may also be the length direction of the cell holder 10, while the second direction is the width direction of the cell holder 10. This means that the holder body is equipped with at least two columns of mounting zones. Each column of the mounting zone includes at least two mounting grooves 110. In this configuration, the cells 430 are mounted vertically on the cell holder 10.

In some embodiments, the flow guide outlets 230 within the same mounting zone are oriented in the same direction. The flow guide outlets 230 of two adjacent layers of mounting zones are oriented in different directions.

It can be understood that when the flow guide outlets 230 within the same mounting zone are oriented in the same direction, all flow guide members 20 in that mounting zone can discharge the gas generated by the respective cells 430 in their corresponding mounting grooves 110 in the same direction. For example, all flow guide members 20 in the same mounting zone can discharge the gas generated by the cells 430 in the mounting grooves 110 downward. In this case, a pressure-relief channel can be constructed below to collectively discharge the gas generated by all the cells 430 corresponding to that mounting zone. When the flow guide outlets 230 of two adjacent layers of mounting zones are oriented in different directions, the flow guide members 20 of two adjacent layers of mounting zones can discharge the gas generated by the respective cells 430 in their corresponding mounting grooves 110 from different directions. For example, the flow guide members 20 in the upper and lower mounting zones can discharge the gas generated by the cells 430 in the mounting grooves 110 upward and downward, respectively. In this case, pressure-relief channels can be constructed in different zones to discharge the gas generated by all the cells 430 corresponding to their respective mounting zones.

It should be noted that when the flow guide outlets 230 of two adjacent layers of mounting zones are oriented in different directions, it means that if the flow guide outlet 230 of one layer is set to face upward, the flow guide outlet 230 of the other layer can be set to face downward, left, right, or any direction other than directly upward.

When the mounting zones arc configured with at least three layers, the flow guide outlet 230 of the first layer and the flow guide outlet 230 of the Nth layer can be the same or different, where N ≥ 3.

In some embodiments, the holder body is equipped with two layers of mounting zones. The flow guide outlets 230 of the two layers of mounting zones are oriented in opposite directions.

It can be understood that when the holder body has two layers of mounting zones, the flow guide outlet 230 of the upper mounting zone can be set to face upward, and the flow guide outlet 230 of the lower mounting zone can be set to face downward. Consequently, a pressure-relief channel can be provided at each of the upper and lower ends of the holder body to separately discharge the gas generated by all the cells 430 corresponding to the upper mounting zone and the lower mounting zone.

It should be noted that when the two layers of mounting zones in the holder body are distributed vertically, the flow guide outlets 230 of the two layers are set to face upward or downward, respectively. When the two layers of mounting zones in the holder body are distributed horizontally, the flow guide outlets 230 of the two layers are set to face left or right, respectively.

Please refer to FIG. 1 and FIG. 2. In some embodiments, wall surfaces of at least some of the mounting grooves 110 are each provided with a mounting notch 130. The mounting notch 130 is configured to mount a temperature sensor.

It can be understood that when the cell holder 10 is used in a battery pack, the battery pack needs to monitor the temperature of the cell 430. By forming the mounting notch 130 on the wall surface of at least some of the mounting grooves 110, the temperature sensor can be installed within the mounting notch 130 to monitor the temperature of at least some of the cells 430.

For example, the holder body may be provided with a mounting notch 130 on the wall surface of the mounting groove 110. By installing a temperature sensor within this notch, the temperature value of the cell 430 at that location can be obtained, which can reflect the average temperature of all cells 430 on the entire holder body. Alternatively, the holder body may be provided with mounting notches 130 on the wall surfaces of four mounting grooves 110. By installing a temperature sensor in each mounting notch 130, the temperature values of the cells 430 at four different locations can be obtained. The average of these four temperature values can reflect the average temperature of all cells 430 on the holder body. Additionally, the four temperature values can be individually assessed in real-time to monitor the temperature of the cells 430 at each location in real-time.

Please refer to FIG. 1 and FIG 2. In some embodiments, the mounting mounting grooves 110 are configured as circular mounting grooves, designed to accommodate cylindrical cells. In the first direction, the mounting grooves 110 located in different mounting zones are arranged in a staggered manner.

It can be understood that configuring the mounting grooves 110 as circular grooves allows for the installation of cylindrical cells. The staggered arrangement of the mounting grooves 110 in different mounting zones in the first direction can optimize the distribution of the mounting grooves 110, enabling the cells 430 to be compactly installed on the holder body, thereby reducing the height and length of the holder body. Specifically, the mounting grooves 110 of two adjacent layers of mounting zones are externally tangent.

It should be noted that the staggered arrangement of the mounting grooves 110 in different mounting zones means that the centers of the mounting grooves 110 in different mounting zones are misaligned with each other.

Please refer to FIG. 1 and FIG. 2. In some embodiments, the bottom surface of the mounting groove 110 is provided with a through hole 140. The through hole 140 is configured to allow the positive terminal or negative terminal of the cell 430 to pass through.

It can be understood that the cell 430 has a positive electrode and a negative electrode. The positive electrode is equipped with a positive terminal, and the negative electrode is equipped with a negative terminal. When the positive electrode of the cell 430 is placed within the mounting groove 110, the positive terminal of the cell 430 can protrude through the through hole 140. Once the positive terminal extends through the through hole 140, it can be welded to a connecting tab. This connecting tab can be welded to the positive terminal or negative terminal of another cell 430 to achieve series or parallel connections between two adjacent cells 430. Similarly, when the negative electrode of the cell 430 is placed within the mounting groove 110, the negative terminal of the cell 430 can protrude through the through hole 140. Once the negative terminal extends through the through hole 140, it can be welded to a connecting tab. This connecting tab can be welded to the positive terminal or negative terminal of another cell 430 to achieve series or parallel connections between two adjacent cells 430.

It should be noted that the through hole 140 is spaced apart from the aforementioned pressure-relief hole 120. The shape of the through hole 140 is adapted to match the shape of the positive terminal or negative terminal of the cell 430. When the cell 430 is installed in the mounting groove 110, the positive terminal or negative terminal of the cell 430 can seal the through hole 140. In the event of thermal runaway of the cell 430, gases released from the explosion-proof valve can be vented through the pressure-relief hole 120.

The adaptation of the shape of the through hole 140 to the shape of the positive terminal or negative terminal of the cell 430 means that the shape of the through hole 140 is identical to the shape of the positive terminal or negative terminal of the cell 430, and the size of the through hole 140 is exactly the same as the size of the positive terminal or negative terminal of the cell 430. Alternatively, the shape of the through hole 140 is identical to the shape of the positive terminal or negative terminal of the cell 430, and the size of the through hole 140 is larger than the size of the positive terminal or negative terminal of the cell 430.

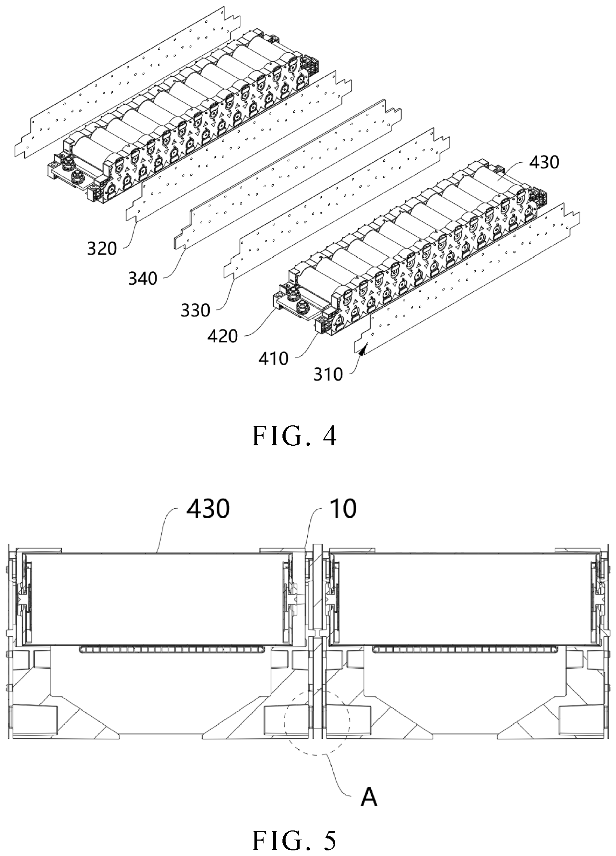

As shown in FIG. 3 and FIG. 4, in some embodiments, the side of the holder body that is opposite the opening of the mounting groove 110 is connected to a heat insulation member 30.

It can be understood that by providing the heat insulation member 30 on the outer surface of the holder body, the transfer of heat from the cells 430 on one holder body to another can be prevented. For example, when a plurality of battery modules 40 are installed within a battery box, the cells 430 within each battery module 40 are connected through the holder body. In this case, the heat insulation member 30 can prevent the transfer of heat from one battery module 40 to another, thereby avoiding thermal interference between different battery modules 40.

In some embodiments, the heat insulation member 30 may include two layers of mica sheets spaced apart, with foam arranged between the two layers of mica sheets.

Please refer to FIG. 2 and FIG. 4. In some embodiments, the side of the holder body opposite the opening of the mounting groove 110 is provided with a positioning portion 150. The heat insulation member 30 is provided with a positioning hole 310. The positioning portion 150 is snap-fitted into the positioning hole 310.

It can be understood that the design of the positioning portion 150 and the positioning hole 310 facilitates the quick installation of the heat insulation member 30 onto the holder body. The shape of the positioning portion 150 is adapted to match the shape of the positioning hole 310. For example, if the positioning hole 310 is a circular hole, then the positioning portion 150 is a cylindrical structure. Similarly, if the positioning hole 310 is a square hole, then the positioning portion 150 is a square column structure.

In some embodiments, the side of the holder body opposite the opening of the mounting groove 110 is provided with at least two positioning portions 150 spaced apart from each other. Correspondingly, the heat insulation member 30 is provided with at least two positioning holes 310 spaced apart from each other. Each positioning portion 150 corresponds to a positioning hole 310.

In some embodiments, the positioning portion 150 is integrally formed with the holder body.

Referring to FIG. 3 and FIG. 4, some embodiments of the present application further provide a battery module 40. The battery module 40 includes a first bracket 410, a second bracket 420, and cells 430. The first bracket 410 is spaced apart from the second bracket 420. The cells 430 are connected between the first bracket 410 and the second bracket 420. At least one of the first bracket 410 and the second bracket 420 employs the cell holder 10 as described in the aforementioned embodiments.

In the embodiments of the present application, the cell 430 is installed by constructing the mounting groove 110 on the holder body. The pressure-relief hole 120 is set on the bottom surface of the mounting groove 110. Since the pressure-relief hole 120 corresponds to the position where the explosion-proof valve of the cell 430 is located, when thermal runaway occurs in the cell 430 causing the explosion-proof valve to open, the gas generated inside the cell 430 can escape through the pressure-relief hole 120 after being released from the explosion-proof valve. This prevents the accumulation of gas within the cell holder 10, thereby eliminating safety hazards and enhancing the safety of the battery module 40.

In some embodiments, the first bracket 410 employs the cell holder 10 as described in the aforementioned embodiments. Alternatively, the second bracket 420 employs the cell holder 10 as described in the aforementioned embodiments. Alternatively, both the first bracket 410 and the second bracket 420 employ the cell holder 10 as described in the aforementioned embodiments.

In some embodiments, the first bracket 410 and the second bracket 420 are spaced apart in the horizontal direction, configured to allow the cells 430 to be horizontally connected between the first bracket 410 and the second bracket 420.

It can be understood that by spacing the first bracket 410 and the second bracket 420 in the horizontal direction, the cells 430 can be horizontally connected between the first bracket 410 and the second bracket 420. This design, along with structures such as the pressure-relief hole 120 and the flow guide member 20, addresses the gap in thermal runaway design for horizontal cylindrical cells.

In some embodiments, along the first direction, the holder body is equipped with at least two layers of mounting zones. Each layer of the mounting zone includes at least two mounting grooves 110. The at least two mounting grooves 110 are spaced apart in the second direction. The first direction and the second direction are arranged at an angle to each other. A heat-conducting member is provided between every two adjacent layers of mounting zones. The heat-conducting member is thermally coupled to the outer surface of the cell 430.

It can be understood that the heat-conducting member can heat or cool the cells 430 on its opposite sides to maintain the cells 430 at an appropriate operating temperature. For example, when the cells 430 are in a low-temperature environment, the heat-conducting member can heat each cell 430 to raise its temperature. Conversely, when the cells 430 are in a high-temperature environment, the heat-conducting member can cool each cell 430 to lower its temperature.

It should be noted that a cavity is formed inside the heat-conducting member, which can be configured to allow a heat exchange fluid to flow through it. The cavity may be communicated with a liquid storage unit through a pipeline. The liquid storage unit is configured to store the heat exchange liquid. The outlet of the liquid storage unit is equipped with a heating unit and a cooling unit. When the cells 430 are in a low-temperature environment, the heat exchange fluid discharged from the liquid storage unit can be heated by the heating unit, thereby using the thermal fluid to heat each cell 430 and raise its temperature. When the cells 430 are in a high-temperature environment, the heat exchange fluid discharged from the liquid storage unit can be cooled by the cooling unit, thereby using the thermal fluid to cool each cell 430 and lower its temperature.

When the cells 430 are configured as cylindrical cells, the heat-conducting member is designed in a serpentine structure. The cavity within the heat-conducting member can also be configured in a serpentine shape.

It should be noted that the thermal coupling between the heat-conducting member and the outer surface of the cell 430 means that the heat-conducting member is in contact with the outer surface of the cell 430. Alternatively, the heat-conducting member is bonded to the outer surface of the cell 430 using thermally conductive adhesive. This ensures that the heat-conducting member and the cell 430 form a thermal connection, enabling rapid heat transfer to achieve quick heating or cooling.

Some embodiments of the present application further provide a battery pack. The battery pack includes the aforementioned battery module 40.

In the embodiments of the present application, the cell 430 is installed by constructing the mounting groove 110 on the holder body. The pressure-relief hole 120 is set on the bottom surface of the mounting groove 110. Since the pressure-relief hole 120 corresponds to the position where the explosion-proof valve of the cell 430 is located, when thermal runaway occurs in the cell 430 causing the explosion-proof valve to open, the gas generated inside the cell 430 can escape through the pressure-relief hole 120 after being released from the explosion-proof valve. This prevents the accumulation of gas within the cell holder 10, thereby eliminating safety hazards and enhancing the safety of the battery pack.

In some embodiments, the battery pack further includes a battery box. The battery module 40 is disposed within the battery box. By securing the plastic cell holder 10 to fix the cells 430 and then securing the entire assembly within the battery box, it is possible to prevent the cells 430 from shifting in the event of thermal runaway.

Referring to FIG. 3 and FIG. 4, in some embodiments, at least two battery modules 40 are provided. A heat insulation member 30 is provided between every two adjacent battery modules 40.

It can be understood that placing the heat insulation member 30 between two adjacent battery modules 40 can prevent the heat from one battery module 40 from being transferred to another battery module 40, thereby avoiding temperature interference between different battery modules 40.

In some embodiments, the heat insulation member 30 abuts against the flow guide member 20 on the holder body, forming a pressure-relief channel between the heat insulation member 30 and the outer surface of the holder body. The pressure-relief hole 120 is communicated with the pressure-relief channel.

It can be understood that since the heat insulation member 30 abuts against the flow guide member 20 on the holder body, and the flow guide member 20 is spaced apart from the holder body, the heat insulation member 30 is also necessarily spaced apart from the holder body. This configuration allows for the formation of a pressure-relief channel between the heat insulation member 30 and the outer surface of the holder body. By communicating the pressure-relief hole 120 with the pressure-relief channel, the gases generated by the cells 430 can be expelled through the pressure-relief hole 120 and then discharged along the pressure-relief channel.

When the holder body has two layers of mounting zones, the flow guide outlet 230 of the upper mounting zone can be oriented upwards, while the flow guide outlet 230 of the lower mounting zone can be oriented downwards. In this configuration, two pressure-relief channels can be formed between the heat insulation member 30 and the flow guide member 20. One pressure-relief channel is disposed close to the upper end of the holder body, allowing it to communicate with the flow guide outlet 230 of the upper mounting zone, thereby concentrating the discharge of gases generated by all the cells 430 corresponding to the upper mounting zone. The other pressure-relief channel is disposed close to the lower end of the holder body, allowing it to communicate with the flow guide outlet 230 of the lower mounting zone, thereby concentrating the discharge of gases generated by all the cells 430 corresponding to the lower mounting zone.

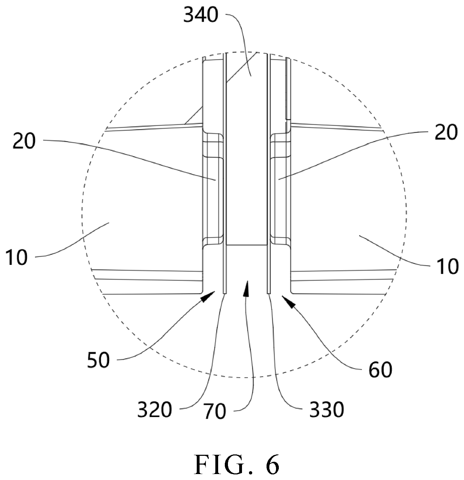

Please refer to FIG. 5 and FIG. 6. In some embodiments, the pressure-relief channel includes a first pressure-relief channel 50, a second pressure-relief channel 60, and a third pressure-relief channel 70. The heat insulation member 30 includes a first heat insulation layer 320, a second heat insulation layer 330, and a third heat insulation layer 340. The first heat insulation layer 320 is connected to one holder body, and the first pressure-relief channel 50 is formed between the first heat insulation layer 320 and the outer surface of the holder body. The second heat insulation layer 330 is spaced apart from the first heat insulation layer 320. The second heat insulation layer 330 is connected to another holder body, and the second pressure-relief channel 60 is formed between the second heat insulation layer 330 and the outer surface of the holder body. The third heat insulation layer 340 is disposed between the first heat insulation layer 320 and the second heat insulation layer 330. In the first direction, the height of the third heat insulation layer 340 is less than the height of each of the first heat insulation layer 320 and the second heat insulation layer 330. The third heat insulation layer 340 is configured to form the third pressure-relief channel 70 between the first heat insulation layer 320 and the second heat insulation layer 330. Both the first heat insulation layer 320 and the second heat insulation layer 330 are flexible heat insulation layers. The first heat insulation layer 320 is configured to deform during pressure relief, allowing the first pressure-relief channel 50 to communicate with the third pressure-relief channel 70. The second heat insulation layer 330 is configured to deform during pressure relief, allowing the second pressure-relief channel 60 to communicate with the third pressure-relief channel 70.

It can be understood that the first pressure-relief channel 50 and the second pressure-relief channel 60 can each independently connect to their respective pressure-relief holes 120, allowing each battery module 40 to independently relieve pressure and achieve module-level gas-electric separation. When the space in the first pressure-relief channel 50 and/or the second pressure-relief channel 60 is insufficient, the gas can cause the first heat insulation layer 320 and/or the second heat insulation layer 330 to deform, thereby allowing the first pressure-relief channel 50 to communicate with the third pressure-relief channel 70, and/or allowing the second pressure-relief channel 60 to communicate with the third pressure-relief channel 70. This ensures that there is sufficient pressure relief space between two adjacent battery modules 40, preventing thermal propagation due to insufficient pressure relief space.

It should be noted that when the holder body has two layers of mounting zones, the flow guide outlet 230 of the upper mounting zone can be oriented upwards, while the flow guide outlet 230 of the lower mounting zone can be oriented downwards. The gases generated by the cells 430 in the upper mounting zone can be expelled upwards through their respective flow guide outlets 230. Due to the sufficient spacing between the upper surface of the battery module 40 and the cover of the battery box, this spacing can serve as the upper pressure-relief channel. Given the larger spacing, thermal propagation due to insufficient pressure relief space can be avoided. The lower end of the third heat insulation layer 340 may have a gap area, allowing the first heat insulation layer 320 to form the first pressure-relief channel 50 with the outer surface of the holder body, and the second heat insulation layer 330 to form the second pressure-relief channel 60 with the outer surface of the holder body, while the third pressure-relief channel 70 is formed between the first heat insulation layer 320 and the second heat insulation layer 330. The gases generated by the cells 430 in the lower mounting zone can be discharged into the first pressure-relief channel 50 or the second pressure-relief channel 60. Due to the constraints of the bottom plate of the battery box, there may be insufficient space in the first pressure-relief channel 50 or the second pressure-relief channel 60. The flexible design of the first heat insulation layer 320 and the second heat insulation layer 330 allows them to deform under the action of the gas, enabling the first pressure-relief channel 50, the second pressure-relief channel 60, and the third pressure-relief channel 70 to communicate with each other. This ensures that there is sufficient space in the pressure-relief channels near the bottom plate of the battery box, thereby preventing thermal propagation caused by insufficient pressure relief space.

The deformation of the first heat insulation layer 320 during pressure relief means that the first heat insulation layer 320 inclines towards the direction closer to the second heat insulation layer 330 under the action of opposing gas, creating a gap between the lower end of the first heat insulation layer 320 and the bottom plate of the battery box. This allows the first pressure-relief channel 50 to communicate with the third pressure-relief channel 70.

The deformation of the second heat insulation layer 330 during pressure relief means that the second heat insulation layer 330 inclines towards the direction closer to the first heat insulation layer 320 under the action of opposing gas, creating a gap between the lower end of the second heat insulation layer 330 and the bottom plate of the battery box. This allows the second pressure-relief channel 60 to communicate with the third pressure-relief channel 70.

Since both the first heat insulation layer 320 and the second heat insulation layer 330 are flexible heat insulation layers, they can be moved by the gas to enable communication among the first pressure-relief channel 50, the second pressure-relief channel 60, and the third pressure-relief channel 70. For example, both the first heat insulation layer 320 and the second heat insulation layer 330 are mica sheets. The third heat insulation layer 340 is foam.

## Claims

1. A cell holder, comprising:
a holder body provided with a mounting groove, wherein the mounting groove is configured to mount a cell, a bottom surface of the mounting groove is provided with a pressure-relief hole, and the pressure-relief hole is configured to correspond to a position where an explosion-proof valve of the cell is located;
wherein the holder body is connected to a flow guide member protruding in a direction away from an opening of the mounting groove, the flow guide member covers a part of the pressure-relief hole, and the flow guide member is configured to direct gas to be discharged in a predetermined direction after passing through the pressure-relief hole.

2. The cell holder according to claim 1, wherein the flow guide member comprises:
a shielding portion spaced apart from the holder body and covering a part of the pressure-relief hole; and
a connecting portion connected between the shielding portion and the holder body, wherein the connecting portion extends along a periphery of the pressure-relief hole, the connecting portion is provided with a flow guide outlet communicated with the pressure-relief hole, and the flow guide outlet is oriented in the predetermined direction.

3. The cell holder according to claim 2, wherein the holder body is provided with at least two layers of mounting zones in a first direction, and each layer of the mounting zones is provided with at least two mounting grooves spaced apart in a second direction, wherein the first direction and the second direction are arranged at an angle.

4. The cell holder according to claim 3, wherein the flow guide outlets in the same mounting zone are oriented in a same direction, and the flow guide outlets in two adjacent layers of the mounting zones are oriented in different directions.

5. The cell holder according to claim 3 or 4, wherein the holder body is provided with two layers of the mounting zones, and the flow guide outlets in the two layers of the mounting zones are oriented in opposite directions.

6. The cell holder according to any one of claims 3 to 5, wherein a wall surface of at least part of the mounting grooves is provided with a mounting notch, and the mounting notch is configured to mount a temperature sensor.

7. The cell holder according to any one of claims 3 to 6, wherein the mounting groove is a circular groove configured to mount a cylindrical cell, and the mounting grooves located in different mounting zones are arranged in a staggered configuration in the first direction.

8. The cell holder according to any one of claims 1 to 7, wherein a bottom surface of the mounting groove is further provided with a through hole, and the through hole is configured to allow a positive terminal or a negative terminal of the cell to pass through.

9. The cell holder according to any one of claims 1 to 8, wherein a side of the holder body away from the opening of the mounting groove is connected to a heat insulation member.

10. The cell holder according to claim 9, wherein the side of the holder body away from the opening of the mounting groove is provided with a positioning portion, the heat insulation member is provided with a positioning hole, and the positioning hole is engaged with the positioning portion.

11. A battery module, comprising:
a first bracket;
a second bracket spaced apart from the first bracket; and
a cell connected between the first bracket and the second bracket;
wherein at least one of the first bracket and the second bracket adopts the cell holder as claimed in any one of claims 1 to 10.

12. The battery module according to claim 11, wherein the first bracket and the second bracket are spaced apart from each other in a horizontal direction, and the first bracket and the second bracket are configured to allow the cell to be horizontally connected between the first bracket and the second bracket.

13. The battery module according to claim 11 or 12, wherein the holder body is provided with at least two layers of mounting zones in a first direction, and each layer of the mounting zones is provided with at least two mounting grooves spaced apart in a second direction, wherein the first direction and the second direction are arranged at an angle; and
wherein a heat-conducting member is provided between every two adjacent layers of the mounting zones, and the heat-conducting member is thermally coupled to an outer surface of the cell.

14. A battery pack, comprising the battery module as claimed in any one of claims 11 to 13.

15. The battery pack according to claim 14, wherein at least two battery modules are provided, and a heat insulation member is provided between every two adjacent battery modules.

16. The battery pack according to claim 15, wherein the heat insulation member abuts against a flow guide member on the holder body, so that a pressure-relief channel is formed between the heat insulation member and an outer surface of the holder body, wherein the pressure-relief hole is communicated with the pressure-relief channel.

17. The battery pack according to claim 16, wherein the pressure-relief channel comprises a first pressure-relief channel, a second pressure-relief channel, and a third pressure-relief channel, and the heat insulation member comprises:
a first heat insulation layer connected to a holder body, wherein the first pressure-relief channel is formed between the first heat insulation layer and an outer surface of the holder body;
a second heat insulation layer spaced apart from the first heat insulation layer, wherein the second heat insulation layer is connected to another holder body, and the second pressure-relief channel is formed between the second heat insulation layer and an outer surface of the another holder body; and
a third heat insulation layer disposed between the first heat insulation layer and the second heat insulation layer;
wherein in the first direction, a height of the third heat insulation layer is less than a height of each of the first heat insulation layer and the second heat insulation layer, and the third heat insulation layer is configured to form the third pressure-relief channel between the first heat insulation layer and the second heat insulation layer; both the first heat insulation layer and the second heat insulation layer are flexible heat insulation layers, the first heat insulation layer is configured to deform during pressure relief, so that the first pressure-relief channel is communicated with the third pressure-relief channel, and the second heat insulation layer is configured to deform during pressure relief, so that the second pressure-relief channel is communicated with the third pressure-relief channel.
